# EUROPÄISCHE PATENTSCHRIFT

(11) **EP 4 060 772 B1**
(45) Veröffentlichungstag und Bekanntmachung des Hinweises auf die Patenterteilung: **12.06.2024**
(21) Anmeldenummer: 22162131.1
(22) Anmeldetag: 15.03.2022
(51) Int. Cl.: H01M 4/64

(54) **VERFAHREN ZUR HERSTELLUNG EINER ABLEITERFOLIE FÜR BATTERIEN**
METHOD FOR PRODUCING A CONDUCTOR FOIL FOR BATTERIES
PROCÉDÉ DE FABRICATION D'UNE FEUILLE FORMANT COLLECTEUR POUR BATTERIES

(30) Priorität: 18.03.2021 DE 102021202644
(43) Veröffentlichungstag der Anmeldung: 21.09.2022
(73) Patentinhaber: VOLKSWAGEN AG, 38440 Wolfsburg (DE)
(72) Erfinder: BREUER, Alexander, 29227 Celle (DE); FIETKAU, Lars, 38176 Wendeburg (DE)
(74) Vertreter: FDST Patentanwälte

(56) Entgegenhaltungen:
- EP-A1- 3 415 265
- DE-A1-102013 203 810
- US-A1- 2018 079 035

## Beschreibung

Die Erfindung betrifft ein Verfahren zur Herstellung einer Ableiterfolie für Batterien sowie eine Fertigungsvorrichtung.

In zunehmendem Maße werden Kraftfahrzeuge zumindest teilweise mittels eines Elektromotors angetrieben, sodass diese als Elektrofahrzeug oder Hybridfahrzeug ausgestaltet sind. Zur Bestromung des Elektromotors wird üblicherweise eine Hochvoltbatterie herangezogen, die mehrere einzelne Batteriemodule umfasst. Die Batteriemodule sind meist zueinander baugleich sowie miteinander elektrisch in Reihe und/oder parallel geschaltet, sodass die an der Hochvoltbatterie anliegende elektrische Spannung einem Vielfachen der mittels jedes der Batteriemodule bereitgestellten elektrischen Spannung entspricht. Jedes Batteriemodul wiederum umfasst mehrere Batterien, die meist in einem gemeinsamen Gehäuse angeordnet sind, und die miteinander elektrisch in Reihe und/oder parallel geschaltet sind.

Jede der Batterien wiederum umfasst üblicherweise mehrere Batteriezellen, die jeweils auch als galvanisches Element bezeichnet werden. Diese weisen jeweils zwei Elektroden, nämlich eine Anode und eine Kathode, sowie einen dazwischen angeordneten Separator als auch einen Elektrolyten mit freibeweglichen Ladungsträgern auf. Als ein derartiger Elektrolyt wird beispielsweise eine Flüssigkeit herangezogen. In einer Alternative ist die Batterie als Festkörperbatterie ausgestaltet, und der Elektrolyt liegt als Festkörper vor.

Die Anode und die Kathode, die die Elektroden der Batteriezelle bilden, umfassen üblicherweise einen Stromableiter auch lediglich als Ableiter oder Träger bezeichnet wird. An diesem ist üblicherweise ein Aktivmaterial befestigt, das ein Bestandteil einer auf den Träger aufgebrachten Schicht ist. Hierbei ist es möglich, dass in der Schicht bereits der Elektrolyt vorhanden ist, oder dieser wird nachträglich eingebracht. Zumindest jedoch ist das Aktivmaterial zur Aufnahme der Arbeitsionen, z.B. Lithium-Ionen, geeignet. Je nach Verwendung als Anode oder Kathode wird ein anderes Material für den Träger und eine unterschiedliche Art des Materials der Schicht verwendet.

Die Ableiter werden üblicherweise aus einer Metallfolie erstellt, sodass eine Dicke der Elektroden vergleichsweise gering ist. Die Metallfolie liegt üblicherweise zunächst als Rohfolie in Rollenform vor. Auf diese wird die Schicht aufgetragen und anschließend ausgehärtet. Im Anschluss hieran erfolgt ein Ablängen von der Rollware, sodass die jeweilige Elektrode erstellt ist. Damit eine elektrische Kontaktierung der Elektrode vereinfacht ist, wird nicht auf die vollständige Fläche der Rohfolie die Schicht aufgetragen, sondern ein Randbereich wird frei von der Schicht belassen, sodass dort eine direkte elektrische Kontaktierung mit dem Ableiter ermöglicht ist. Hierfür ist lediglich ein vergleichsweise geringer Abschnitt des Randbereichs erforderlich, und der verbleibende Teil des Randbereichs wird nicht benötigt. Damit dieser Platz anderweitig genutzt werden kann, wird der Randbereich in diesem Teil meist ausgespart, wobei dies üblicherweise vor dem Aufbringen der Schicht erfolgt.

Üblicherweise wird zum Aussparen zunächst die Rohfolie abgewickelt und zu einer Stanzmaschine geleitet. Mittels dieser erfolgt ein Stanzen des Randbereichs, sodass die Abschnitte als Anschlüsse stehen bleiben und die verbleibenden Teile abgetrennt werden. Nachfolgend wird die auf diese Weise bearbeitete Rohfolie erneut aufgewickelt und kann zwischengelagert werden. Auch ist ein direktes Weiterverarbeiten, insbesondere das Versehen mit der Schicht, ermöglicht.

Zum Stanzen ist es erforderlich, dass der abgewickelte und zu stanzende Abschnitt der Rohfolie nicht bewegt wird. Somit wird zunächst der Abschnitt der Rolle abgewickelt und in die Stanzmaschine geführt. Im Anschluss wird die Rolle stillgesetzt und die Stanzmaschine betätigt. Nachfolgend wird dieser Stanzmaschine aus der Stanzmaschine entfernt, wofür die Rolle erneut abgewickelt und somit ein neuer Abschnitt der Rohfolie der Stanzmaschine zugeleitet wird. Folglich erfolgt ein getaktetes Bearbeiten der Rohfolie. Somit wirkt einerseits eine vergleichsweise hohe Belastung auf der Rohfolie. Andererseits ist aufgrund der Materialeigenschaften der Rohfolie eine maximale Beschleunigung und Abbremsung vorgegeben. Somit ist es nicht möglich, die Herstellungsgeschwindigkeit über ein bestimmtes Maß zu erhöhen.

Aus DE 10 2013 203 810 A1 und US 2018/0079035 A1 ist das Schneiden einer Metallfolie mittels eines Lasers bekannt, während die Metallfolie kontinuierlich bewegt wird. Dabei wird die Laserstrahl in Abhängigkeit der Transportgeschwindigkeit des Elektrodenbands gesteuert, wobei mittels des Lasers eine Trajektorie mit konstanter Geschwindigkeit abgefahren wird.

Der Erfindung liegt die Aufgabe zugrunde, ein besonders geeignetes Verfahren zur Herstellung einer Ableiterfolie für Batterien und eine besonders geeignete Fertigungsvorrichtung zur Herstellung einer Ableiterfolie anzugeben, wobei vorteilhafterweise eine Flexibilität erhöht und/oder ein Ausschuss verringert sind.

Hinsichtlich des Verfahrens wird diese Aufgabe durch die Merkmale des Anspruchs 1 und hinsichtlich der Fertigungsvorrichtung durch die Merkmale des Anspruchs 3 erfindungsgemäß gelöst. Vorteilhafte Weiterbildungen und Ausgestaltungen sind Gegenstand der jeweiligen Unteransprüche.

Das Verfahren dient der Herstellung einer Ableiterfolie für Batterien. Zum Beispiel ist es dabei möglich, aus der Ableiterfolie lediglich einen einzigen Ableiter zu erstellen. Besonders bevorzugt ist es jedoch möglich, aus der Ableiterfolie mehrere Ableiter zu erstellen. Die erstellten Ableiter sind im bestimmungsgemäßen Zustand jeweils ein Bestandteil einer Elektrode der jeweiligen Batterie. Die mittels der Ableiterfolie erstellten Elektroden sind dabei beispielsweise Anoden oder Kathoden. Jede der Elektroden umfasst zweckmäßigerweise eine Schicht, die auf den jeweiligen Ableiter aufgetragen ist. Die Schicht weist insbesondere ein Aktivmaterial auf, das zur Aufnahme von Arbeitsionen, wie Lithium-Ionen, geeignet sowie vorgesehen und eingerichtet ist. Als Aktivmaterial wird beispielsweise ein Lithium-Metall-Oxid, wie Lithium-Cobalt(III)-Oxid (LiCoO2), NMC, NCA, LFP, GIC, LTO verwendet. Alternativ wird als Aktivmaterial NMC622 oder NMC811 herangezogen.

Beispielsweise werden für die jeweilige Batterie mehrere Elektroden übereinandergestapelt, wobei sich hierbei die Anoden und Kathoden abwechseln, und wobei zwischen den einzelnen Elektroden jeweils ein Separator angeordnet ist. Mit anderen Worten umfasst die Batterie somit einen Zellstapel. Alternativ hierzu wird die Ableiter Folie oder zumindest ein Teil hiervon aufgewickelt, und die Batterie umfasst eine sogenannte "Jelly Roll".

Die erstellten Batterien sind im bestimmungsgemäßen Zustand vorzugsweise jeweils ein Bestandteil eines Kraftfahrzeugs. Hierfür sind die Batterien geeignet, insbesondere vorgesehen und eingerichtet. Im bestimmungsgemäßen Zustand sind die Batterien beispielsweise ein Bestandteil eines Energiespeichers des Kraftfahrzeugs, der mehrere derartige Batterien aufweist. Vorzugsweise sind hierbei die Batterien auf mehrere Batteriemodule aufgeteilt, die zueinander wiederum baugleich sind. Die Batterien sind insbesondere in einem Gehäuse des Energiespeichers bzw. des jeweiligen Batteriemoduls angeordnet und miteinander elektrisch parallel und/oder in Reihe geschaltet. Somit ist die an dem Energiespeicher/Batteriemodul anliegende elektrische Spannung ein Vielfaches der mittels jeder der Batterien bereitgestellten elektrischen Spannung. Das Gehäuse des Energiespeichers bzw. des jeweiligen Batteriemoduls ist bevorzugt aus einem Metall gefertigt, beispielsweise einem Stahl, wie einem Edelstahl, oder einer Aluminium-Legierung. Zu dessen Herstellung wird zum Beispiel ein Druckgussverfahren verwendet. Insbesondere ist das Gehäuse des Energiespeichers bzw. des jeweiligen Batteriemoduls verschlossen ausgestaltet. Zweckmäßigerweise ist in das Gehäuse des Energiespeichers bzw. des jeweiligen Batteriemoduls eine Schnittstelle eingebracht, die einen Anschluss des Energiespeichers/Batteriemoduls bildet. Die Schnittstelle ist dabei elektrisch mit den Batterien kontaktiert, sodass ein Einspeisen von elektrischer Energie und/oder eine Entnahme von elektrischer Energie aus den Batterien von außerhalb des Energiespeichers möglich ist, sofern an den Anschluss ein entsprechender Stecker gesteckt ist.

Das Kraftfahrzeug ist bevorzugt landgebunden und weist vorzugsweise eine Anzahl an Rädern auf, von denen zumindest eines, vorzugsweise mehrere oder alle, mittels eines Antriebs angetrieben sind. Geeigneterweise ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw).

Mittels des Antriebs erfolgt zweckmäßigerweise eine Fortbewegung des Kraftfahrzeugs. Zum Beispiel ist der Antrieb, insbesondere der Hauptantrieb, zumindest teilweise elektrisch ausgestaltet, und das Kraftfahrzeug ist beispielsweise ein Elektrofahrzeug. Der Elektromotor wird zum Beispiel mittels des Energiespeichers betrieben, der geeigneterweise als eine Hochvoltbatterie ausgestaltet ist. Mittels der Hochvoltbatterie wird zweckmäßigerweise eine elektrische Gleichspannung bereitgestellt, wobei die elektrische Spannung zum Beispiel zwischen 200 V und 800 V und beispielsweise im Wesentlichen 400 V beträgt. Vorzugsweise ist zwischen dem Energiespeicher und dem Elektromotor ein elektrischer Umrichter angeordnet, mittels dessen die Bestromung des Elektromotors eingestellt wird. In einer Alternative weist der Antrieb zusätzlich einen Verbrennungsmotor auf, sodass das Kraftfahrzeug als Hybrid-Kraftfahrzeug ausgestaltet ist. In einer Alternative wird mittels des Energiespeichers ein Niedervoltbordnetz des Kraftfahrzeugs gespeist, und mittels des Energiespeichers wird insbesondere eine elektrische Gleichspannung von 12 V, 24 V oder 48 V bereitgestellt.

In einer weiteren Alternative ist die Batterie ein Bestandteil eines Flurförderfahrzeug, einer Industrieanlage, eines handgeführten Geräts, wie beispielsweise eines Werkzeugs, insbesondere eines Akkuschraubers. In einer weiteren Alternative ist die Batterie ein Bestandteil einer Energieversorgung und wird dort beispielsweise als sogenannte Pufferbatterie verwendet. In einer weiteren Alternative ist die Batterie ein Bestandteil eines tragbaren Geräts, beispielsweise eines tragbaren Mobiltelefons, oder eines sonstigen Wearables. Auch ist es möglich, eine derartige Batterie im Campingbereich, Modellbaubereich oder für sonstige Outdoor-Aktivitäten zu verwenden.

Das Verfahren sieht vor, dass zunächst eine Rolle mit einer metallischen Rohfolie bereitgestellt ist. Mit anderen Worten ist die Rohfolie zu der Rolle zusammengerollt. Die Rohfolie ist aus einem Metall erstellt, wobei das Metall auf die Art der Elektrode abgestimmt ist, die mittels des jeweiligen aus der Ableiterfolie erstellten Ableiters erstellt werden soll. So wird für eine Ableiterfolie, aus der Anoden erstellt werden sollen, beispielsweise eine Kupferfolie verwendet, und für Ableiter, mittels der Kathoden erstellt werden sollen, wird vorzugsweise eine Aluminiumfolie verwendet. Beispielsweise besteht die Rohfolie lediglich auf blankem Metall. Alternativ hierzu ist auf dem Metall bereits eine Beschichtung vorhanden, insbesondere eine Schicht. Diese ist beispielsweise lediglich auf einer Seite oder auf beiden Seiten des Metalls vorhanden. Die Schicht weist beispielsweise das jeweilige Aktivmaterial, einen Binder und/oder ein Leitadditiv auf, wie beispielsweise Leitruß oder Leitgraphit.

Bei dem Verfahren wird die Rollen mit einer Vorschubgeschwindigkeit in eine Vorschubrichtung kontinuierlich abgerollt. Insbesondere ist hierbei die Vorschubrichtung senkrecht zur Achse, um die die Rohfolie aufgewickelt ist, und um die die Rolle zum Abrollen rotiert wird. Die Vorschubgeschwindigkeit ist beispielsweise konstant oder auf aktuelle Anforderungen angepasst. Insbesondere wird diese bei Beginn des Verfahrens zunächst erhöht, bis eine gewünschte Geschwindigkeit erreicht ist. Die Vorschubgeschwindigkeit korrespondiert zu einer Geschwindigkeit, mit der die Rolle abgerollt wird. Insbesondere wird der Teil der Rohfolie, der abgewickelt wird, einer Laserschneidgruppe zugeleitet.

Mittels der Laserschneidgruppe werden, während die Rolle abgerollt wird, in einem Randbereich der abgewickelten Rohfolie Anschlüsse ausgeschnitten. Die Anschlüsse, die mittels der Laserschneidgruppe ausgeschnitten werden, verbleiben an den restlichen Bestandteilen der Rohfolie, und die sich zwischen den Anschlüssen in Vorschubrichtung befindenden Bestandteile werden von dem Rest der Rohfolie abgetrennt. Insbesondere weisen die Anschlüsse einer rechteckförmige Form auf, und der Randbereich erstreckt sich entlang der vollständigen Vorschubrichtung. Zum Beispiel reicht der Randbereich von einer Kante der Rohfolie, die sich entlang der Vorschubrichtung erstreckt, zu einem Mittelbereich und entspricht zum Beispiel maximal 10 %, 5 % oder 2 % der Ausdehnung senkrecht zu der Kante.

Sofern die Rohfolie bereits mit der Schicht versehen ist, ist zweckmäßigerweise der Randbereich frei von der Schicht. Sofern die Schicht noch nicht vorhanden ist, wird geeigneterweise nachfolgend lediglich der Bereich beschichtet, der nicht mittels der Anschlüsse gebildet ist. Der Abstand der Anschlüsse zueinander in Vorschubrichtung, die mittels der Laserschneidgruppe ausgeschnitten werden, ist beispielsweise konstant. In diesem Fall werden anhand der Ableiterfolie zweckmäßigerweise mehrere gleichartige Ableiter erstellt, und die mittels der Ableiter erstellten Elektroden werden insbesondere übereinandergestapelt. Alternativ hierzu ändert sich der Abstand der Anschlüsse in Vorschubrichtung, und anhand der Ableiterfolie wird insbesondere eine Elektrode erstellt, die aufgewickelt ist, insbesondere zu einer sogenannten "Jelly Roll".

Beispielsweise ist die Rohfolie, bei der die Anschlüsse ausgeschnitten sind, die Ableiterfolie, oder es sind weitere Arbeitsschritte zum vollständigen Erstellen der Ableiterfolie erforderlich, wie beispielsweise das Versehen mit der etwaigen Schicht. Zumindest jedoch ist es möglich, anhand der Ableiterfolie einen oder mehrere Ableiter für die Batterien zu erstellen.

Da während des kontinuierlichen Abrollens der Rolle die Anschlüsse ausgeschnitten werden, ist ein Beschleunigen und Abbremsen der Rohfolie, was zu einer vergleichsweise hohen mechanischen Belastung der Rohfolie führen würde, nicht erforderlich. Somit ist eine Beschädigung der Rohfolie beim Herstellen der Ableiterfolie vermieden, weswegen ein Ausschuss verringert ist. Auch ist es möglich, die Vorschubgeschwindigkeit an bestimmte Anforderungen anzupassen und beispielsweise die Menge der erstellten Ableiterfolie auf die aktuellen Bedürfnisse anzupassen. Somit ist eine Flexibilität erhöht. Dabei ist es auch möglich, eine vergleichsweise hohe Vorschubgeschwindigkeit und somit eine vergleichsweise hohe Herstellungsgeschwindigkeit für die Ableiterfolie zu wählen, ohne dass mehrere Laserschneidgruppen erforderlich sind. Somit sind Herstellungskosten einer Fertigungsvorrichtung zur Herstellung der Ableiterfolie, die entsprechend des Verfahrens betrieben ist, verringert. Da zudem die Laserschneidgruppe vergleichsweise wenige bewegte Teile aufweist, ist die Anpassung der Vorschubgeschwindigkeit erleichtert.

Die Laserschneidgruppe weist vorzugsweise einen Laser auf, mittels dessen eine Optik bestrahlt ist. Mittels der Optik ist es zweckmäßigerweise möglich, und diese ist insbesondere hierfür vorgesehen und eingerichtet, den Laserstrahl, der mittels des Lasers erstellt wird, umzulenken. Geeigneterweise umfasst die Optik hierfür einen angetriebenen oder zumindest beweglichen Spiegel. Zweckmäßigerweise weist die Laserschneidgruppe zusätzlich einen Schneidtisch mit einer Schneidmaske auf. Insbesondere ist der Bereich der Rohfolie, der mittels der Laserschneidgruppe geschnitten werden soll, zwischen der Optik und dem Schneidetisch angeordnet. Die Schneidmaske ist insbesondere darauf angepasst, wie der Laserstrahl mittels der Optik geführt wird. Mittels der Schneidmaske wird zweckmäßigerweise zumindest teilweise die Form eines der Ableiter vorgegeben, und bei einem Durchdringen des Laserstrahls durch die Rohfolie trifft dieser auf einen bestimmten Teil der Schneidmaske trifft, bei dem ein Zurückstreuen zu der Rohfolie vermieden ist.

Die Laserschneidgruppe wird während des Ausschneidens jedes der Anschlüsse in der Vorschubrichtung mit der Vorschubgeschwindigkeit bewegt, sodass keine Relativbewegung zwischen der Laserschneidgruppe und der Rohfolie erfolgt. Somit ist es möglich, die Laserschneidgruppe in gleicher Weise anzusteuern, wie wenn die Rohfolie stillgesetzt ist. Somit ist eine Ansteuerung der Laserschneidgruppe vereinfacht und intuitiver. Nachdem der jeweilige Anschluss ausgeschnitten ist, wird Laserschneidgruppe zweckmäßigerweise in die ursprüngliche Position bewegt, also entgegen der Vorschubrichtung. Sobald nachfolgend die Rohfolie derart abgewickelt wurde, dass sich eine Stelle, an der ein weiterer der Anschlüsse ausgeschnitten werden soll, in der Laserschneidgruppe befindet, wird diese erneut in die Vorschubrichtung mit der Vorschubgeschwindigkeit bewegt.

Vorzugsweise entspricht die Rohfolie, in die die Anschlüsse eingebracht sind, der Ableiterfolie. Beispielsweise wird der Teil der Rohfolie, der bereits die Anschlüsse aufweist, abgelängt, insbesondere sofern die mittels der Ableiter erstellten Elektroden lagenförmig übereinander gestapelt werden sollen. Mit anderen Worten erfolgt eine Vereinzelung der Ableiter aus der Rohfolie, die die Anschlüsse aufweist, und die insbesondere die Ableiterfolie bildet. Alternativ hierzu wird der Teil der Rohfolie, der bereits die Anschlüsse aufweist, erneut aufgerollt, sodass eine Lagerhaltung ermöglicht ist. Somit ist es möglich, mehrere Ableiterfolien vorzuproduzieren und diese bei Bedarf zur Herstellung der Batterien heranzuziehen.

Die Fertigungsvorrichtung dient der Herstellung einer Ableiterfolie und ist hierfür geeignet, insbesondere vorgesehen und eingerichtet. Insbesondere ist die Fertigungsvorrichtung derart betrieben, dass mittels dieser die Ableiterfolie oder zumindest ein Vorprodukt hiervon hergestellt wird. Die Fertigungsvorrichtung weist eine Aufnahmestation für eine Rolle mit einer metallischen Rohfolie auf. Zudem weist die Fertigungsvorrichtung eine Abwickelvorrichtung für die Rolle auf. Insbesondere weist die Abwickelvorrichtung einen Elektromotor oder einer sonstigen Antrieb auf, mittels dessen die Rolle angetrieben ist. Zudem weist die Fertigungsvorrichtung eine Laserschneidgruppe auf.

Die Fertigungsvorrichtung ist gemäß einem Verfahren betrieben, bei dem eine Rolle mit einer metallischen Rohfolie bereitgestellt wird. Insbesondere wird hierfür die Rohfolie von der Aufnahmestation aufgenommen. Während die Rolle mit einer Vorschubgeschwindigkeit in eine Vorschubrichtung kontinuierlich abgerollt wird, wird mittels der Laserschneidgruppe in einem sich entlang der Vorschubrichtung erstreckenden Randbereich der abgewickelten Rohfolie Anschlüsse ausgeschnitten. Zum Abrollen wird zweckmäßigerweise die Abwickelvorrichtung verwendet. Insbesondere weist die Fertigungsvorrichtung eine Steuereinheit auf, die geeignet, insbesondere vorgesehen und eingerichtet ist, das Verfahren durchzuführen. Geeigneterweise wird die Fertigungsvorrichtung verwendet, um das Verfahren durchzuführen.

Geeigneterweise umfasst die Fertigungsvorrichtung zusätzlich eine Aufrollvorrichtung, sodass die bearbeitete Rohfolie, die insbesondere die Ableiterfolie bildet, also die die Rohfolie ist, aus der die Anschlüsse ausgeschnitten sind, aufgewickelt wird. Die Laserschneidgruppe umfasst zweckmäßigerweise einen Laser. Bei Betrieb des Lasers wird mittels dessen ein Laserstrahl erzeugt, der insbesondere auf eine Optik der Laserschneidgruppe gerichtet ist. Zweckmäßigerweise ist die Optik verstellbar ausgestaltet, sodass mittels der Optik der Laserstrahl geeignet geführt und/oder umgelenkt wird. Zudem weist die Laserschneidgruppe zweckmäßigerweise einen Schneidetisch mit einer Schneidmaske auf. Die Schneidmaske weist dabei beispielsweise einen Schlitz, mehrere Schlitze oder sonstige Aussparungen auf, wobei der zuschneidende Gegenstand, insbesondere die Rohfolie, sich bei Betrieb der Laserschneidgruppe zwischen der Optik und dem Schneidetisch befindet. Die Aussparungen in dem Schneidetisch sind hierbei derart, dass bei Durchdringen des zuschneiden Gegenstand, also der Rohfolie, mittels des Laserstrahls, dieser auf die Schlitze trifft, sodass ein unkontrolliertes Zurückstreuen auf die Rohfolie vermieden ist.

Die Erfindung betrifft daher auch die Verwendung der Fertigungsvorrichtung zur Durchführung des Verfahrens und auch eine gemäß dem Verfahren und/oder mittels der Fertigungsvorrichtung hergestellte Ableiterfolie sowie eine daraus erstellte Batterie.

Die im Zusammenhang mit dem Verfahren beschriebenen Vorteile und Weiterbildungen sind sinngemäß auch auf die Fertigungsvorrichtung /die Verwendung/ die Ableiterfolie /die Batterie und untereinander zu übertragen und umgekehrt.

Nachfolgend werden Ausführungsbeispiele der Erfindung anhand einer Zeichnung näher erläutert. Darin zeigen:
- Fig. 1: schematisch vereinfacht ein Kraftfahrzeug, das eine Hochvoltbatterie mit mehreren baugleichen Batterien aufweist,
- Fig. 2: in einer Schnittdarstellung schematisch eine der Batterien, die zwei Ableiter aufweist, die aus einer Ableiterfolie erstellt sind
- Fig. 3: in einer Draufsicht ausschnittsweise eine Rohfolie,
- Fig. 4: gemäß Fig. 3 eine aus der Rohfolie erstellte Ableiterfolie,
- Fig. 5: ein Verfahren zur Herstellung einer Ableiterfolie für Batterien,
- Fig. 6: in einer Draufsicht eine eine Schneidmaske aufweisende Fertigungsvorrichtung zur Herstellung einer Ableiterfolie,
- Fig. 7: die Schneidmaske in einer Frontalansicht,
- Fig. 8 - 10: eine weitere Variante der Schneidmaske in unterschiedlichen Betriebsstellungen,
- Fig. 11: gemäß Fig. 6 ausschnittsweise eine Alternative der Fertigungsvorrichtung, und
- Fig. 12: in einer Frontalansicht die Fertigungsvorrichtung gemäß Fig. 11.

Einander entsprechende Teile sind in allen Figuren mit den gleichen Bezugszeichen versehen.

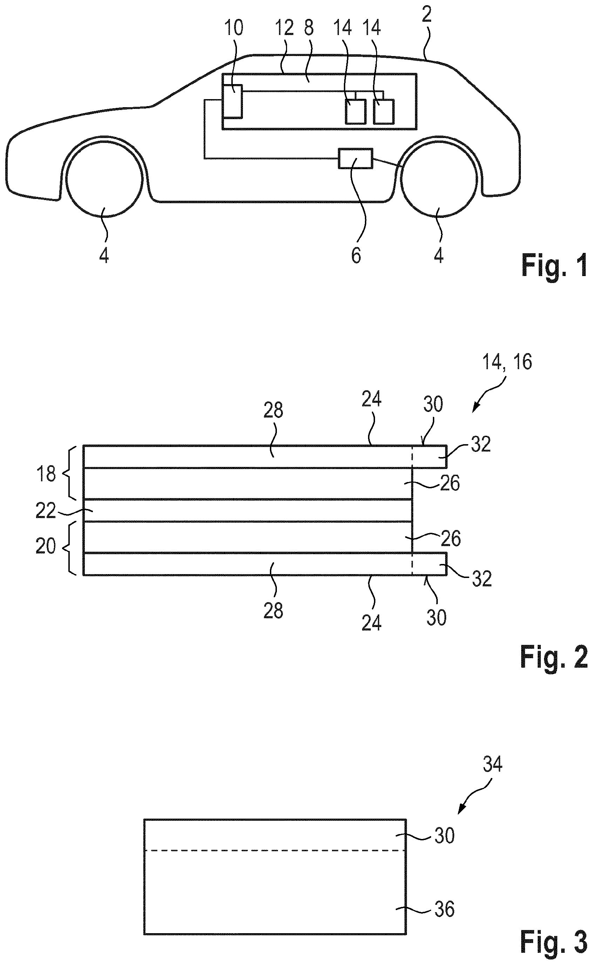

In Figur 1 ist schematisch vereinfacht ein Kraftfahrzeug 2 in Form eines Personenkraftwagens (Pkw) dargestellt. Das Kraftfahrzeug 2 weist eine Anzahl an Rädern 4 auf, von denen zumindest einige mittels eines Antriebs 6 angetrieben sind, der einen Elektromotor umfasst. Somit ist das Kraftfahrzeug 2 ein Elektrofahrzeug oder ein Hybrid-Fahrzeug. Der Antrieb 6 weist einen Umrichter auf, mittels dessen der Elektromotor bestromt ist. Der Umrichter des Antriebs 6 wiederum ist mittels eines Energiespeichers 8 in Form einer Hochvoltbatterie bestromt. Hierfür ist der Antrieb 6 mit einer Schnittstelle 10 des Energiespeichers 8 verbunden, die in ein Gehäuse 12 des Energiespeichers 8 eingebracht ist, das aus einem Edelstahl erstellt ist. Innerhalb des Gehäuses 12 des Energiespeichers 8 sind mehrere Batteriemodule angeordnet, von denen ein Teil der Batteriemodule zueinander elektrisch in Reihe und diese wiederum elektrisch zueinander parallel geschaltet sind. Der elektrische Verband der Batteriemodule ist mit der Schnittstelle 10 elektrisch kontaktiert, sodass bei Betrieb des Antriebs 6 ein Entladen oder Laden (Rekuperation) der Batteriemodule erfolgt. Aufgrund der elektrischen Verschaltung ist dabei die an der Schnittstelle 10 bereitgestellte elektrische Spannung, die 400 V beträgt, ein Vielfaches der mit den zueinander baugleichen Batteriemodule jeweils bereitgestellten elektrischen Spannung.

Jedes der Batteriemodule wiederum umfasst mehrere Batterien 14, von denen hier zwei dargestellt sind. Die Batterien 14 jedes Batteriemoduls sind elektrisch miteinander zum Teil parallel und anderenfalls elektrisch in Reihe geschaltet, sodass die mittels jedes Batteriemoduls bereitgestellte elektrische Spannung einem Vielfachen der mittels einer der Batterien 14 bereitgestellten elektrischen Spannung beträgt.

In Figur 2 ist in einer Schnittdarstellung ausschnittsweise eine der zueinander baugleichen Batterien 14 dargestellt. Die Batterie 14 weist mehrere zueinander baugleiche Batteriezellen 16 auf, von denen hier lediglich eine einzige dargestellt ist. Die Batteriezelle 16 umfasst eine Anode 18 und eine Kathode 20, die jeweils flächig ausgestaltet sind, und zwischen denen ein Separator 22 angeordnet ist und an diesen anliegt. Die einzelnen Batteriezellen 16 sind zur Batterie 14 übereinander gestapelt, wobei zwischen den einzelnen Batteriezellen 16 jeweils ein weiterer, nicht näher dargestellter Separator angeordnet ist, sodass ein Zellstapel gebildet ist.

Die Anode 18 und die Kathode 20 weisen jeweils einen Ableiter 24 auf, der auch als Träger bezeichnet wird, und der jeweils eine Metallfolie ist. Im Fall der Anode 18 ist der Ableiter 24 eine Kupferfolie, und im Fall der Kathode 20 ist der Ableiter 24 eine Aluminiumfolie. Die Ableiter 24 sind zumindest auf der dem Separator 22 zugewandten Seite jeweils mit einer Schicht 26 versehen, die ein Aktivmaterial, wie NMC, und einen Binder sowie ein Leitadditiv aufweist, Im Fall der Anode 18 ist das Leitadditiv zum Beispiel Graphit und im Fall der Kathode 20 Leitruß.

Hierbei ist nicht jeweils der vollständige Ableiter 24 mit der Schicht 26 versehen, sondern lediglich ein Hauptkörper 28, und ein sich jeweils in einem Randbereich 30 befindender Anschluss 32 ist frei von der Schicht 26. Die Größe des Hauptkörpers 28 und somit auch die Größe der Schicht 26 entspricht dabei der Größe des Separators 22. Im Montagezustand sind an den Anschlüssen 32 weitere Bestandteile elektrisch angebunden, beispielsweise die Anschlüsse 32 der weiteren Batteriezellen 16 oder Anschlüsse der Batterie 14, insbesondere über sogenannte Stromschienen.

In Figur 3 ist eine Rohfolie 34 ausschnittsweise dargestellt, aus der die Ableiter 24 erstellt werden. Die Rohfolie 24 ist metallisch und, je nachdem, ob hieraus Anoden 18 oder Kathoden 20 erstellt werden sollen, als Kupferfolie bzw. Aluminiumfolie ausgestaltet. Das blanke Metall der Rohfolie 24 ist dabei in einer Ausführungsform mit einer nicht näher gezeigten Beschichtung oder bereits der Schicht 26 versehen. Die Rohfolie 34 weist den Randbereich 30 auf, der sich entlang deren Längsrichtung erstreckt, und einen Hauptbereich 36, der den verbleibenden Teil der Rohfolie 34 bildet, und der die Hauptkörper 28 der jeweiligen Elektrode, also entweder der Anode 18 oder Kathode 20, bilden wird.

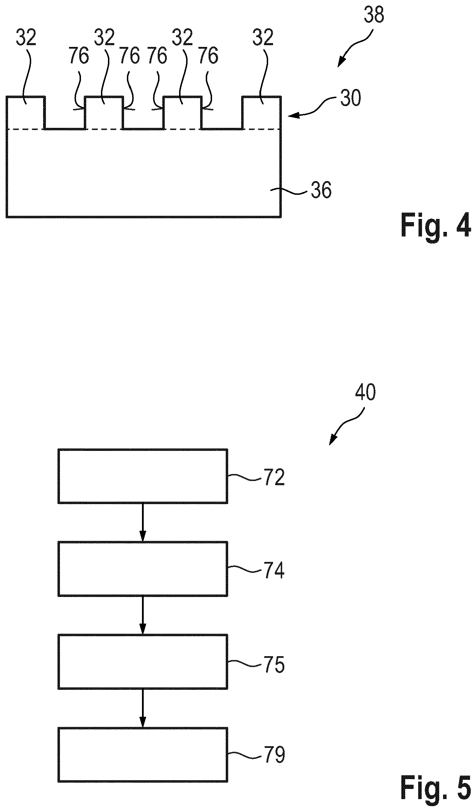

Aus der Rohfolie 34 wird eine Ableiterfolie 38 erstellt, die in Figur 4 dargestellt ist. Die Ableiterfolie 38 weist auch weiterhin den Hauptbereich 36 auf, der nicht verändert ist. In dem Randbereich 30 hingegen sind die Anschlüsse 32 ausgeschnitten. Die sich zwischen den Anschlüssen 32 befindenden Teile der Rohfolie 34 sind hingegen entfernt. Die Form der Anschlüsse 32 ist rechteckförmig, und der Abstand der Anschlüsse 32 zueinander ist konstant. Aus der Ableiterfolie 38 werden die einzelnen Ableiter 24 erstellt, indem die Ableiterfolie abgelängt wird. Hierfür wird die Ableiterfolie 38 geschnitten, wobei der Schnitt senkrecht zum Verlauf des Randbereichs 30 ist. Somit wird die Ableiterfolie 38 vereinzelt, sodass die Ableiter 24 erstellt sind. Hierbei ist jedem der Ableiter 24 jeweils einer der Anschlüsse 32 zugeordnet, und die Größe der Ableiter 24 ist gleich.

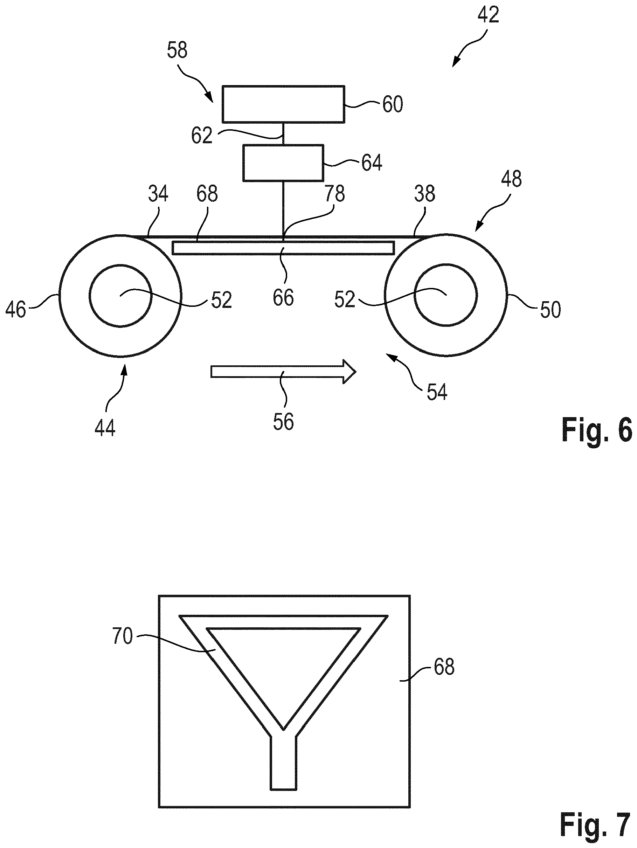

In Figur 5 ist ein Verfahren 40 zur Herstellung der Ableiterfolie 38 dargestellt, wofür eine in Figur 6 in einer Draufsicht dargestellte Fertigungsvorrichtung 42 verwendet wird. Hierfür weist die Fertigungsvorrichtung 42 eine nicht näher dargestellte Steuereinheit auf, die geeignet, vorgesehen und eingerichtet ist, das Verfahren 40 durchzuführen. Mit anderen Worten ist die Fertigungsvorrichtung 42 entsprechend des Verfahrens 40 betrieben.

Die Fertigungsvorrichtung 42 weist zudem eine Aufnahmestation 44 für eine Rolle 46 auf, zu der die metallische Rohfolie 34 aufgerollt ist. Auch weist die Fertigungsvorrichtung 42 eine Aufrollvorrichtung 48 mit einer weiteren Rolle 50 auf. Sowohl die Aufrollvorrichtung 48 als auch die Aufnahmestation 44 weisen jeweils einen Antrieb 52 auf, mittels derer die Rolle 46 bzw. die weitere Rolle 50 angetrieben sind. Die Antriebe 52 sind Bestandteile einer Abwickelvorrichtung für die Rolle 46, und bei Betrieb der Antrieb 52 wird die Rolle 46 ab und folglich die Rohfolie 46 in eine Vorschubrichtung 56 abgewickelt und auf die weitere Rolle 50 aufgewickelt, die sich in Vorschubrichtung 56 hinter der Rolle 46 befindet.

Zwischen der Aufnahmestation 44 und der Aufrollvorrichtung 48 ist eine Laserschneidgruppe 58 angeordnet, die einen Laser 60 aufweist. Bei Betrieb wird mittels des Lasers 60 ein Laserstrahl 62 erstellt, der auf eine Optik 64 der Laserschneidgruppe 58 gerichtet ist. Die Optik 64 weist einen nicht näher dargestellten Spiegel auf, der beweglich gelagert sowie angetrieben ist. Dabei ist es möglich, mittels der Einstellung der Optik 64 den Verlauf des Laserstrahls 62 zu verändern. Der Laserstrahl 62 ist mittels der Optik 64 auf einen Schneidtisch 66 gerichtet, der eine Schneidmaske 68 aufweist. Hierbei wird, wenn die Rohfolie 34 von der Rolle 46 abgewickelt und in Richtung der Aufrollvorrichtung 48 in der Vorschubrichtung 56 bewegt wird, diese zwischen der Optik 64 und dem Schneidtisch 66 hindurchbewegt. Die Schneidmaske 68 bildet zumindest teilweise die der Rohfolie 34 zugewandte Begrenzung des Schneidtischs 66. Die Schneidmaske 68 ist in Figur 7 in einer Draufsicht von der Optik 64 her gezeigt. Diese weist einen dreieckförmigen Schlitz 70 auf.

Das Verfahren 40 sieht vor, dass in einem ersten Arbeitsschritt 72 die Rolle 46 mit der metallischen Rohfolie 34 bereitgestellt wird. Hierfür wird die Rolle 46 in die Aufnahmestation 44 eingesetzt. In einem nachfolgenden zweiten Arbeitsschritt 74 wird die Rolle 46 mit einer Vorschubgeschwindigkeit in die Vorschubrichtung 56 kontinuierlich abgerollt und somit durch die Laserschneidgruppe 58 hindurchgeführt. Hierbei erstreckt sich der Randbereich 30 entlang der Vorschubrichtung 56.

In einem sich anschließenden dritten Arbeitsschritt 75 werden, während die Rolle 46 kontinuierlich mit der Vorschubgeschwindigkeit abgerollt wird, also der abgerollte Teil der Rohfolie 34 mit der Vorschubgeschwindigkeit in die Vorschubrichtung 56 bewegt wird, mittels der Laserschneidgruppe 58 in den Randbereich 30 der abgewickelten Rohfolie 34 die Anschlüsse 32 ausgeschnitten. Die Anschlüsse 32 weisen jeweils senkrecht zum Verlauf des Randbereichs 30 verlaufende Kanten 76 auf, die somit auch senkrecht zu der Vorschubrichtung 56 sind. Zum Schneiden dieser Kanten 76 der Anschlüsse 32, die senkrecht zur Vorschubrichtung 56 verlaufen, wird ein Schneidpunkt 78, also der Punkt, an dem der Laserstrahl 62 auf die Rohfolie 34 trifft, unter einem Winkel schräg zur Vorschubrichtung 56 geführt.

Das Führen des Schneidpunkts 78 erfolgt mit einer Schneidgeschwindigkeit, die in Abhängigkeit der Vorschubgeschwindigkeit gewählt wird. Dabei wird die senkrecht zur Vorschubrichtung 56 verlaufende Komponente der Schneidgeschwindigkeit sowie auch die parallel zur Vorschubrichtung 56 verlaufende Komponente der Schneidgeschwindigkeit in Abhängigkeit der Vorschubgeschwindigkeit gewählt. Dabei wird der Schneidpunkt 78 stets derart bewegt, dass dieser stets auf den mittels der Rohfolie 34 abgedeckten dreiecksförmigen Schlitz 70 trifft. Mit anderen Worten wird der Schneidpunkt 78 entlang der Dreiecksform des in Figur 7 dargestellten Schlitzes bewegt. Somit befindet dich der Teil des Laserstrahls 62, der nach dem Schneiden durch die Rohfolie 34 hindurchdringt, stets innerhalb des Schlitzes 70. Da die Schneidgeschwindigkeit in Abhängigkeit der Vorschubgeschwindigkeit, also der Geschwindigkeit, mit der die Rohfolie 34 abgewickelt wird, gewählt wird, werden die Kanten 76 stets senkrecht zu dem Verlauf des Randbereichs 30 geschnitten. So wird bei einer vergleichsweise geringen Vorschubgeschwindigkeit auch eine geringe Schneidgeschwindigkeit gewählt, wohingegen bei einer hohen Vorschubgeschwindigkeit eine große Schneidgeschwindigkeit herangezogen wird.

Nachdem die Rohfolie 34 die Laserschneidgruppe 58 in Vorschubrichtung 56 passiert hat, weist diese die Anschlüsse 32 auf, und die Ableiterfolie 38 ist erstellt. Diese wird in einem vierten Arbeitsschritt 79 auf die Aufrollvorrichtung 48 zur weiteren Rolle 50 aufgewickelt, sodass der Teil der Rohfolie 34, der die bereits erstellten Anschlüsse 32 aufweist, erneut aufgewickelt wird. Dabei wird aufgrund des Antriebs der weiteren Rolle 50 auch die Rohfolie 34 von der Rolle 46 abgewickelt.

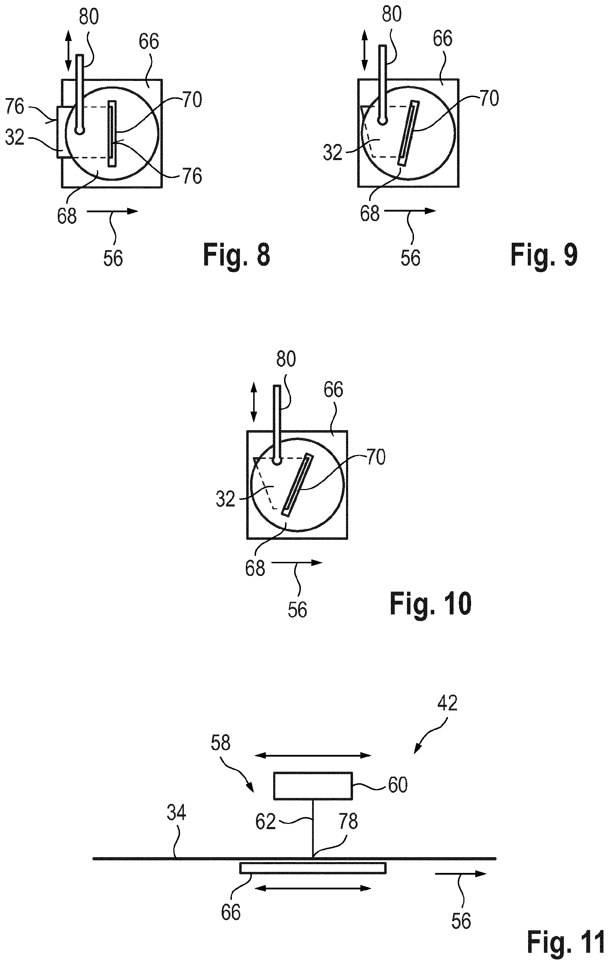

In den Figuren 8-10 ist eine alternative Ausgestaltungsform des Schneidtischs 66 mit der Schneidmaske 58 dargestellt. Die Schneidmaske 68 ist kreisrund und um eine durch deren Mittelpunkt verlaufende Achse drehbar gelagert. Dabei ist die Achse zudem senkrecht zum Verlauf der Rohfolie 34. Der Schlitz 70 der Schneidmaske 68 ist nunmehr geradlinig ausgestaltet. An der Schneidmaske 68 exzentrisch greift ein Hebel 80 an, sodass bei Bewegen des Hebels 80 die Schneidmaske 68 und somit auch der Schlitz 70 bezüglich der Vorschubrichtung 56 verschwenkt wird, wobei der Schlitz 70 zur Vorschubrichtung 56 einen Winkel einschließt.

In Figur 8 beträgt der Winkel 90°, und nimmt sukzessive zur Figur 10 hin ab. In den Figuren ist zudem in einer Überlagerung einer der Anschlüsse 32 jeweils gezeigt. Wenn die Rohfolie 34 während des Schneidens mit der Laserschneidgruppe 58 stillsteht, ist der Schlitz 70 entsprechend der Figur 8 eingestellt, sodass dieser senkrecht zur Vorschubrichtung 56 verläuft. Der Schneidpunkt 78 wird oberhalb des Schlitzes 70 entlang geführt, sodass die senkrecht zur Vorschubrichtung 56 verlaufenden Kanten 76 des jeweiligen Anschlusses 32 erstellt werden.

Falls jedoch, wie von dem Verfahren 40 abgedeckt, die Rohfolie 34 während des Schneidens kontinuierlich abgerollt wird, erfolgt eine Bewegung der Rohfolie 54 bezüglich des Schneidtisch 66. Um die senkrecht verlaufenden Kanten 76 zu erstellen, wird daher der Schneidpunkt 78 unter einem Winkel schräg zur Vorschubrichtung 56 geführt, wobei stets die gleiche Schneidgeschwindigkeit gewählt wird. Hierbei wird der Schneidpunkt 78 oberhalb des Schlitzes 70 bewegt, sodass auch der der Winkel zwischen dem Schlitz 70 und der Vorschubrichtung 56 in Abhängigkeit der Vorschubgeschwindigkeit gewählt ist. So wird bei einer vergleichsweise hohen Vorschubgeschwindigkeit, wie in Figur 10 dargestellt, ein vergleichsweise kleiner Winkel zu der Vorschubrichtung 56 gewählt, wohingegen bei einer vergleichsweise geringen Geschwindigkeit eine Abweichung des Winkels zu 90° vergleichsweise gering ist, wie in Figur 9 dargestellt. Auf diese Weise werden die Anschlüsse 32 rechteckförmig ausgeschnitten, auch wenn der Schneidpunkt 78 im Wesentlichen trapezförmig bewegt wird.

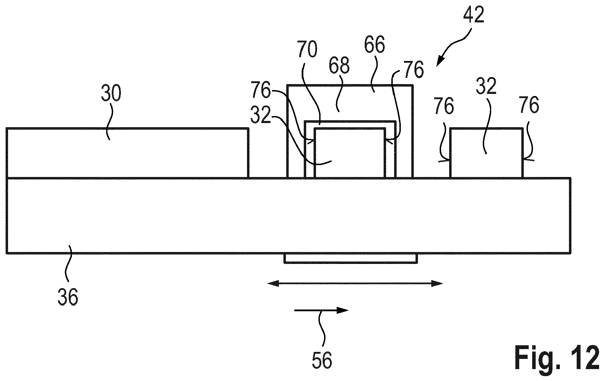

In Figur 11 ist in einer Draufsicht und in Figur 12 in einer Seitenansicht eine weitere Ausführungsform der Fertigungsvorrichtung 42 ausschnittsweise gezeigt, wobei die Aufnahmestation 44, die Aufrollvorrichtung 48 und die Abwickelvorrichtung 54, die nicht dargestellt sind, nicht verändert sind. Die Laserschneidgruppe 58 weist auch weiterhin den Laser 60 sowie die Optik 64 auf, die nicht dargestellt ist, und mittels derer der Laserstrahl 62 geeignet geführt wird. Auch ist der Schneidtisch 66 vorhanden, wobei die Rohfolie 34 zwischen der Optik 64 und dem Schneidtisch 66 hindurchgeführt ist.

Die vollständige Laserschneidgruppe 58 ist jedoch nicht mehr ortsfest, wie bei den vorherigen Ausführungsformen, sondern beweglich ausgestaltet, nämlich in der Vorschubrichtung 56. Während einer der Anschlüsse 32 mittels der Laserschneidgruppe 58 ausgeschnitten wird, wird die Laserschneidgruppe 58 in der Vorschubrichtung 56 mit der Rohfolie 34 mit bewegt. Dabei wird die Laserschneidgruppe 58 mit der Vorschubgeschwindigkeit bewegt, zumindest wenn das Ausschneiden erfolgt. Daher entspricht die Form des Schlitzes 70 der Schneidmaske 68 genau dem Außenumriss eines der Anschlüsse 32, und der Schneidpunkt 78 wird während des Bewegens entsprechend des Verlaufs des Schlitzes 70 geführt. Sobald der jeweilige Anschluss 32 ausgeschnitten ist, wird die vollständige Laserschneidgruppe 58 entgegen der Vorschubrichtung 56 in die ursprüngliche Position bewegt, und, sobald ein weiterer der Anschlüsse 32 erstellt werden soll, erneut in die Vorschubrichtung 56, wobei der Laserstrahl 62 erneut entsprechend des Schlitzes 70 bewegt wird. Somit wird auch hier der Schneidpunkt 78 in Abhängigkeit der Vorschubgeschwindigkeit eingestellt, wobei hierfür zumindest teilweise die vollständige Laserschneidgruppe 58 bewegt wird. Zusammenfassend wird somit die Laserschneidgruppe 58 während des Ausschneidens jedes der Anschlüsse 32 in der Vorschubrichtung 56 mit der Vorschubgeschwindigkeit bewegt.

Bei sämtlichen Varianten wird der Schneidpunkt 78 in Abhängigkeit der Vorschubgeschwindigkeit eingestellt, sodass die Fertigungsanlage 42 mit unterschiedlichen Vorschubgeschwindigkeiten betrieben werden kann, wobei der Verlauf der Kanten 76 stets senkrecht zur Vorschubrichtung 56 und somit zum Randbereich 30 ist. Somit ist es auch möglich, den Teil der Rohfolie 34, der während des Anfahrens der Fertigungsvorrichtung 42 mittels der Laserschneidgruppe 58 bearbeitet wird, als Ableiterfolie 38 nach dem Bearbeiten heranzuziehen. Somit ist ein Ausschuss verringert.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

Die Erfindung ist nicht auf die vorstehend beschriebenen Ausführungsbeispiele beschränkt.

### Bezugszeichenliste

- 2: Kraftfahrzeug
- 4: Rad
- 6: Antrieb
- 8: Energiespeicher
- 10: Schnittstelle
- 12: Gehäuse
- 14: Batterie
- 16: Batteriezelle
- 18: Anode
- 20: Kathode
- 22: Separator
- 24: Ableiter
- 26: Schicht
- 28: Hauptkörper
- 30: Randbereich
- 32: Anschluss
- 34: Rohfolie
- 36: Hauptbereich
- 38: Ableiterfolie
- 40: Verfahren
- 42: Fertigungsvorrichtung
- 44: Aufnahmestation
- 46: Rolle
- 48: Aufrollvorrichtung
- 50: weitere Rolle
- 52: Antrieb
- 54: Abwickelvorrichtung
- 56: Vorschubrichtung
- 58: Laserschneidgruppe
- 60: Laser
- 62: Laserstrahl
- 64: Optik
- 66: Schneidtisch
- 68: Schneidmaske
- 70: Schlitz
- 72: erster Arbeitsschritt
- 74: zweiter Arbeitsschritt
- 75: dritter Arbeitsschritt
- 76: Kante
- 78: Schneidpunkt
- 79: vierter Arbeitsschritt
- 80: Hebel

## Patentansprüche

1. Verfahren (40) zur Herstellung einer Ableiterfolie (38) für Batterien (14), bei welchem
- eine Rolle (46) mit einer metallischen Rohfolie (34) bereitgestellt wird, und
- während die Rolle (46) mit einer Vorschubgeschwindigkeit in eine Vorschubrichtung (56) kontinuierlich abgerollt wird, mittels einer Laserschneidgruppe (58) in einem sich entlang der Vorschubrichtung (56) erstreckenden Randbereich (30) der abgewickelten Rohfolie (34) Anschlüsse (32) ausgeschnitten werden.
**dadurch gekennzeichnet,**
**dass** die Laserschneidgruppe (58) während des Ausschneidens jedes der Anschlüsse (32) in der Vorschubrichtung (56) mit der Vorschubgeschwindigkeit bewegt wird

2. Verfahren (40) nach Anspruch 1 , **dadurch gekennzeichnet, dass** der Teil der Rohfolie (34), der bereits die Anschlüsse (32) aufweist, erneut aufgerollt wird.

3. Fertigungsvorrichtung (42) zur Herstellung einer Ableiterfolie (38), welche eine Aufnahmestation (44) für eine Rolle (46) mit einer metallischen Rohfolie (34), eine Abwickelvorrichtung (54) für die Rolle (46) und eine Laserschneidgruppe (58) aufweist, und welche gemäß einem Verfahren (40) nach einem der Ansprüche 1 bis 2 betrieben ist.

## Claims

1. Method (40) for producing a conductor foil (38) for batteries (14), in which
- a roll (46) of a metallic raw foil (34) is provided, and
- while the roll (46) is continuously unrolled in an advancing direction (56) at an advancing speed, connections (32) are cut out by means of a laser cutting assembly (58) in an edge region (30) of the unwound raw foil (34) extending along the advancing direction (56),
**characterized in that** the laser cutting assembly (58) is moved in the advancing direction (56) at the advancing speed during the cutting out of each of the connections (32) .

2. Method (40) according to Claim 1, **characterized in that** that part of the raw foil (34) which already has the connections (32) is rolled up again.

3. Manufacturing apparatus (42) for producing a conductor foil (38), said manufacturing apparatus having a receiving station (44) for a roll (46) of a metallic raw foil (34), an unwinding device (54) for the roll (46), and a laser cutting assembly (58), and which is operated according to a method (40) according to either of Claims 1 and 2.

## Revendications

1. Procédé (40) de fabrication d'un film déflecteur (38) destiné à des batteries (14), procédé dans lequel
- un rouleau (46) est fourni qui est pourvu d'un film brut métallique (34), et
- pendant que le rouleau (46) est déroulé en continu à une vitesse d'avance dans une direction d'avance (56), des bornes (32) sont découpées au moyen d'un groupe de découpe à laser (58) dans une zone de bord (30), s'étendant suivant la direction d'avance (56), du film brut déroulé (34),
**caractérisé en ce que**
le groupe de découpe à laser (58) est déplacé dans la direction d'avance (56) à la vitesse d'avance pendant la découpe de chacune des bornes (32).

2. Procédé (40) selon la revendication 1, **caractérisé en ce que** la partie du film brut (34) qui comporte déjà les bornes (32) est à nouveau enroulée.

3. Dispositif de fabrication (42) destiné à fabriquer un film déflecteur (38), lequel dispositif comporte un poste de réception (44) destiné à un rouleau (46) pourvu d'un film brut métallique (34), un dispositif de déroulement (54) destiné au rouleau (46) et un groupe de découpe à laser (58) et fonctionne selon un procédé (40) selon l'une des revendications 1 à 2.
